(19) Europäisches Patentamt
European Patent Office
Office européen des brevets

(11) EP 0 889 159 A2

(12) # EUROPÄISCHE PATENTANMELDUNG

(43) Veröffentlichungstag: **07.01.1999 Patentblatt 1999/01**

(51) Int Cl.6: **D06P 1/44**, C09B 29/01, C09B 29/36

(21) Anmeldenummer: **98810586.2**

(22) Anmeldetag: **25.06.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **04.07.1997 CH 1634/97**

(71) Anmelder: **Ciba Specialty Chemicals Holding Inc.**
**4057 Basel (CH)**

(72) Erfinder:
- **Aeschlimann, Peter**
**4123 Allschwil (CH)**
- **Herzig, Paul**
**4057 Basel (CH)**

(54) **Pigmentfärbe-und Pigmentdruckverfahren**

(57) Die vorliegende Erfindung beschreibt ein Verfahren zum Färben oder Bedrucken von Fasermaterial nach dem Pigmenffärbe- oder Pigmentdruckverfahren, welches dadurch gekennzeichnet ist, dass man eine Färbeflotte oder eine Druckpaste, enthaltend mindestens einen Farbstoff der Formel

$$D - (X)_n \qquad (1),$$

worin
D einen Rest eines unlöslichen organischen Farbstoffes der Phthalocyanin-, Perinon-, Indigoid-, Thioindigoid-, Dioxazin-, Diketopyrrolopyrrol-, Isoindolinon-, Perylen-, Chinacridon-, Metallkomplex-, Monoazo-, Disazo-, Trisazo- oder Anthrachinonreihe bedeutet, X ein hydrophiler, polarer Rest, und n 1, 2 oder 3 ist, und mindestens einen Pigmentfarbstoffbinder sowie gegebenenfalls weitere Hilfsmittel, auf das Fasermaterial aufbringt und anschliessend fixiert.



Printed by Jouve, 75001 PARIS (FR)

## Beschreibung

Die vorliegende Erfindung betrifft ein Verfahren zum Färben oder Bedrucken von Fasermaterial mit spezifischen Farbstoffen nach dem Pigmenffärbe- oder Pigmentdruck-verfahren.

Das Färben oder Bedrucken von Fasermaterialien nach den sogenannten Pigmentdruck- oder Pigmentfärbeverfahren gehört zu den seit langem bekannten Verfahren. Die in diesen Verfahren eingesetzten Pigmentfarbstoffe vermögen aber oft nicht in vollem Umfang den heute insbesondere hinsichtlich Sublimier- und Trockenreinigungsechtheiten gestellten Anforderungen zu genügen.

Es wurde nun gefunden, dass man mit dem nachfolgend beschriebenen, erfinderischen Verfahren überraschenderweise eine signifikante Verbesserung der Sublimier- und Trockenreinigungsechtheit von Pigmentdrucken und Pigmenffärbungen erreicht, und somit einen Beitrag zu der erforderlichen Verbesserung dieser Druck- oder Färbeverfahren leisten kann.

Gegenstand der vorliegenden Erfindung ist daher ein Verfahren zum Färben oder Bedrucken von Fasermaterial nach dem Pigmentfärbe- oder Pigmentdruckverfahren, welches dadurch gekennzeichnet ist, dass man eine Färbeflotte oder eine Druckpaste, enthaltend mindestens einen Farbstoff der Formel

$$D - (X)_n \qquad (1)$$

worin
D einen Rest eines unlöslichen organischen Farbstoffes der Phthalocyanin-, Perinon-, Indigoid-, Thioindigoid-, Dioxazin-, Diketopyrrolopyrrol-, Isoindolinon-, Perylen-, Chinacridon-, Metallkomplex-, Monoazo-, Disazo-, Trisazo- oder Anthrachinonreihe bedeutet, X ein hydrophiler, polarer Rest, und n 1, 2 oder 3 ist, und mindestens einen Pigmentfarbstoffbinder sowie gegebenenfalls weitere Hilfsmittel, auf das Fasermaterial aufbringt und anschliessend fixiert.

Bevorzugt wird das Fasermaterial nach dem Pigmentdruckverfahren mit einer Druckpaste, enthaltend mindestens einen Farbstoff der Formel (1), und mindestens einen Pigmentfarbstoffbinder sowie gegebenenfalls weitere Hilfsmittel, bedruckt und anschliessend fixiert.

Bevorzugt als D ist ein Rest eines unlöslichen organischen Farbstoffes der Monoazo-, Disazo-, Trisazo- oder Anthrachinonreihe.

Als unlöslicher organischer Farbstoff wird vorzugsweise ein wasserunlöslicher organischer Farbstoff verstanden.

Bevorzugt in dem erfindungsgemässen Verfahren sind Farbstoffe der Formeln

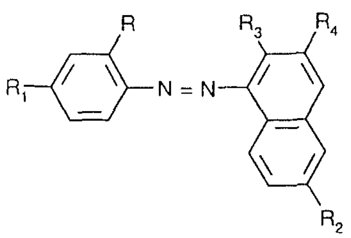

(2),

worin

R Wasserstoff, Halogen, Nitro oder Cyano,
$R_1$ Wasserstoff, Halogen, Nitro, Cyano oder ein Rest X,
$R_2$ Wasserstoff oder ein Rest X,
$R_3$ Amino oder Hydroxy,
$R_4$ Wasserstoff oder ein Rest der Formel

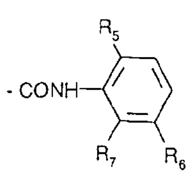

ist, worin $R_5$ Wasserstoff,

$C_1$-$C_4$-Alkyl oder $C_1$-$C_4$-Alkoxy, R6 Wasserstoff oder Halogen, und $R_7$ Wasserstoff, $C_1$-$C_4$-Alkyl oder $C_1$-$C_4$-Alkoxy sind, wobei der Farbstoff der Formel (2) mindestens einen Rest X enthalten muss,

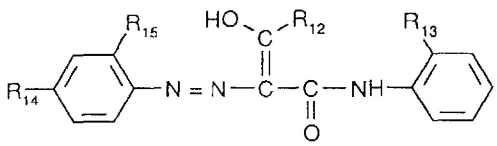

(3),

worin

$R_{12}$ $C_1$-$C_4$-Alkyl,
$R_{13}$ Wasserstoff, Halogen, $C_1$-$C_4$-Alkyl, $C_1$-$C_4$-Alkoxy, Nitro, Cyano oder ein Rest X,
$R_{14}$ Wasserstoff, Halogen, Nitro, Cyano oder ein Rest X,
$R_{15}$ Wasserstoff, Halogen, $C_1$-$C_4$-Alkyl, $C_1$-$C_4$-Alkoxy, Nitro oder Cyano sind, wobei der Farbstoff der Formel (3) mindestens einen Rest X enthalten muss,

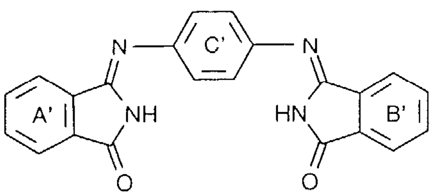

(4),

wobei die Ringe A' und B' ein- oder mehrfach mit Halogen und/oder mit einem Rest X substituiert sind und wobei der Farbstoff der Formel (4) mindestens einen Rest X enthalten muss,

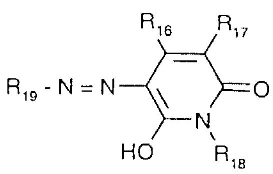

(5),

worin
$R_{16}$ $C_1$-$C_4$-Alkyl oder ein Rest X,
$R_{17}$ Wasserstoff, Cyano oder Carbamoyl,
$R_{18}$ Wasserstoff, $C_1$-$C_4$-Alkyl oder ein Rest X, sind und
$R_{19}$ einen Anthrachinonrest oder einen gegebenenfalls durch $C_1$-$C_4$-Alkyl, $C_1$-$C_4$-Alkoxy, Halogen, Nitro, Cyano, $CF_3$ oder einen Rest X substituierten Phenyl- oder Naphthylrest bedeutet wobei der Farbstoff der Formel (5) mindestens einen Rest X enthalten muss,

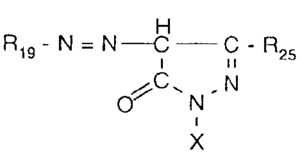

(6),

worin

$R_{19}$ einen Anthrachinonrest oder einen gegebenenfalls durch $C_1$-$C_4$-Alkyl, $C_1$-$C_4$-Alkoxy, Nitro, Cyano oder ein Rest X substituierten Phenyl- oder Naphthylrest, und $R_{25}$ ein $C_1$-$C_6$-Alkyl bedeuten,

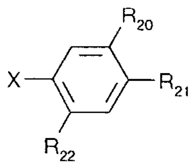

(7),

worin
$R_{20}$ Wasserstoff, Halogen, Cyano oder Nitro,
$R_{21}$ Wasserstoff oder Amino, und
$R_{22}$ Wasserstoff oder Halogen bedeuten,

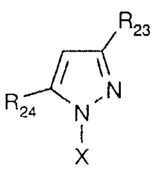

(8),

worin
$R_{23}$ Wasserstoff oder $C_1$-$C_4$-Alkyl, und
$R_{24}$ Wasserstoff, Hydroxy oder Amino bedeuten, und

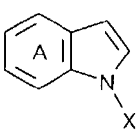

(9),

worin der Ring A unsubstituiert oder weitersubstituiert sein kann.

X in der Formel (1) bedeutet einen hydrophilen, polaren Rest, wie z.B. eine Carbonamidogruppe, eine Sulfonamidogruppe, wobei der Amidorest in diesen Gruppen mit Hydroxy-$C_1$-$C_6$-alkyl mono- oder disubstituiert sein kann, ein unsubstituiertes oder durch Hydroxy substituiertes $C_4$-$C_{12}$-Alkyl, wobei die Alkylkette ein- oder mehrfach durch Sauerstoff, Carbonamido und/oder Sulfonamido unterbrochen ist, oder insbesondere ein $C_1$-$C_6$-Alkyl welches mit einem oder mehreren Hydroxygruppen substituiert ist.

n in der Formel (1) ist 1, 2 oder 3, wobei $(X)_n$ für eine, zwei oder drei gleiche oder verschiedene Reste X steht. Bevorzugt ist n = 1.

Bevorzugt werden in dem erfindungsgemässen Verfahren solche Farbstoffe der Formel (1) verwendet, welche ein Molekulargewicht < als 550 haben.

In dem erfindungsgemässen Verfahren sind besonders bevorzugt Farbstoffe der Formel

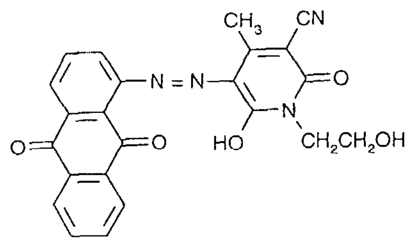

(10),

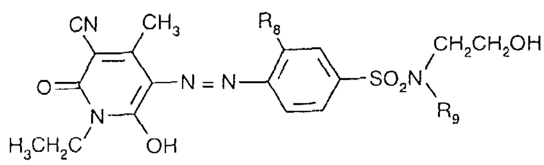

(11),

worin
$R_8$ Wasserstoff, Methoxy, Halogen, Nitro oder $CF_3$ und $R_9$ Wasserstoff, Methyl, Ethyl oder Hydroxyethyl sind,

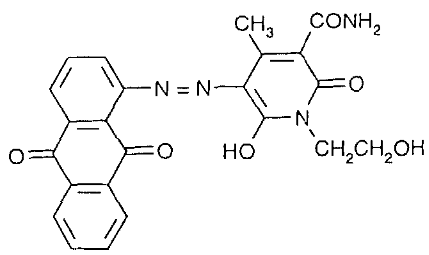

(12),

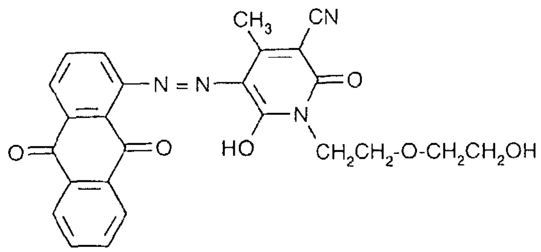

(13),

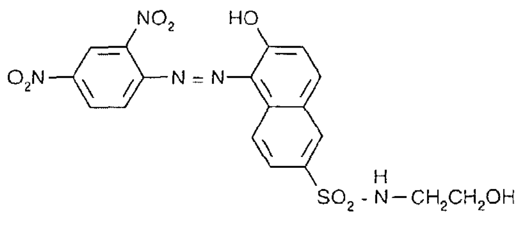

(14),

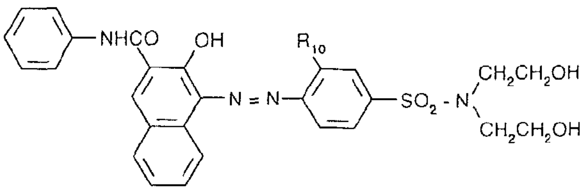

(15),

worin
$R_{10}$ Wasserstoff, Methoxy, Chlor oder Nitro ist,

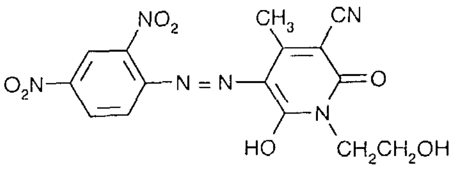

(16),

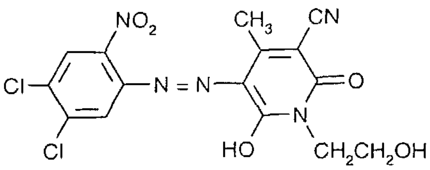

(17),

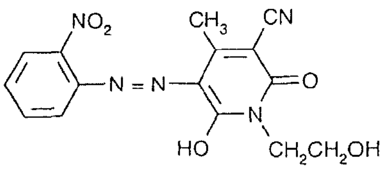

(18),

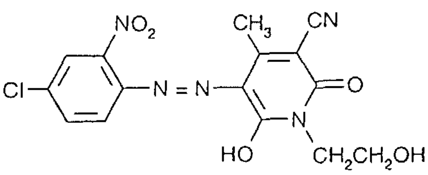

(19),

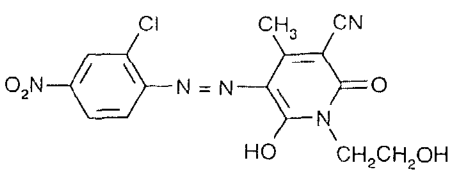

(20),

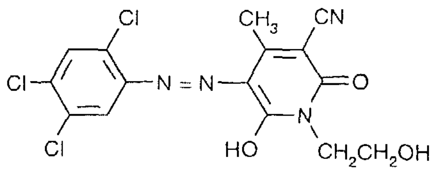

(21),

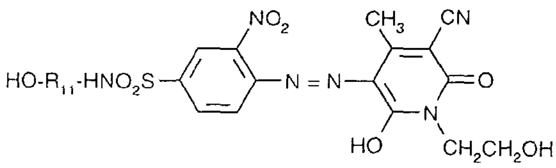

(22),

worin
$R_{11}$ $C_1$-$C_6$-Alkyl ist,

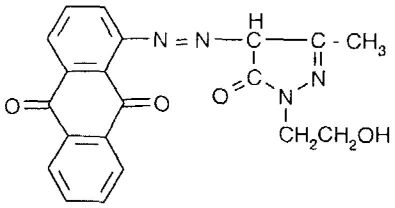

(23),

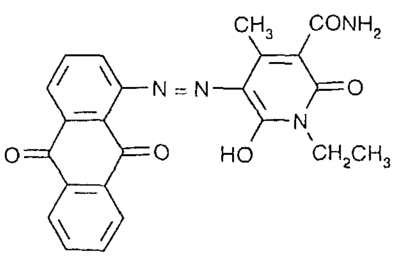

(24)

und

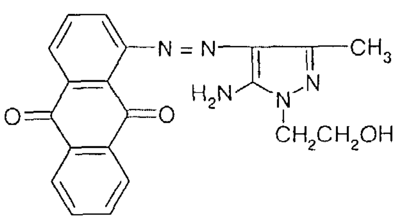

(25).

Ganz besonders bevorzugt sind in dem erfindungsgemässen Verfahren die Farbstoffe der Formeln (10), (11), (12) und (22).

Einen weiteren Gegenstand der vorliegenden Erfindung stellen die Farbstoffe der Formel

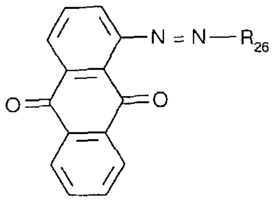

(26),

worin
$R_{26}$ ein Rest der Formel

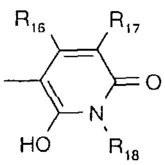

(5a),

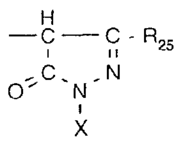

(6a),

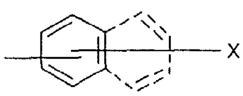

(27)

oder

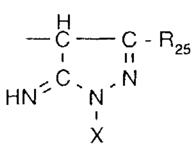

(8a)

ist,
worin $R_{16}$, $R_{17}$, $R_{18}$, und $R_{25}$ die unter den Formeln (5) und (6) angegebene Bedeutung haben, X einen hydrophilen, polaren Rest bedeutet, und der Phenyl- bzw. Naphthylrest in der Formel (27) gegebenenfalls durch Halogen, Cyano oder Nitro substituiert ist, dar, wobei die Farbstoffe der Formel (26) mindestens einen Rest X enthalten müssen.

Die Herstellung der obgenannten Farbstoffe der Formel (26) geschieht nach allgemein bekannten Verfahren, indem man eine Verbindung der Formel

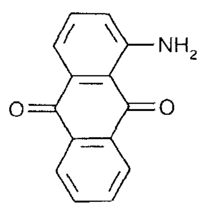

(28)

diazotiert und an eine Kupplungskomponente der Formel (5a), (6a), (27) oder (8a) kuppelt. Das entstandene Farbstoff wird isoliert, gewaschen und getrocknet.

Auf analoge Weise können auch die übrigen oben aufgeführten erfindungsgemäss verwendeten Monoazofarbstoffe hergestellt werden.

Als Pigmentfarbstoffbinder kommen für das erfindungsgemässe Verfahren z.B. Acrylpolymerisate, wie z.B. Poly(meth)acrylsäureester, Poly(meth)acrylamid oder die Mischpolymerisate von (Meth)acrylsäureestern oder (Meth)acrylamid mit geeigneten Comonomeren, wie z.B. Malein-, Fumar-, Itacon-, Mesacon-, Citracon-, Vinylessig-, Vinyloxyessig-, Vinylpropion-, Croton-, Aconit-, Allylessig-, Allyloxyessig-, Allylmalon-, 2-Acrylamido-2-methylpropansulfon-, Glutacon- oder Allylbernsteinsäure oder mit Estern dieser Säuren, N-Vinylpyrrolidon, N-Vinylformamid, N-Vinylacetamid, (Meth)acrolein, N-Vinyl-N-methylacetamid, Vinylcaprolactam, Styrolderivate oder Vinylphosphonsäure; Polyamidderivate; Kunstharzdispersionen; Mischpolymerisate auf Vinylbasis; Diamid-Aldehyd-Vorkondensate; Mischpolymerisate enthaltend N-Vinyllactam oder Polymerisate auf Butadienbasis.

Als Comonomere geeignet sind insbesondere die Ester von den obengenannten Säuren mit $C_1$-$C_6$-Alkoholen, wie z.B. Methyl-, Ethyl-, Isopropyl- oder Butylalkohol, in Betracht.

Die Farbstoffe der Formel (1) werden zweckmässigerweise in der Färbeflotte oder in der Druckpaste in dispergierter Form eingesetzt.

Dabei werden die Farbstoffe mit dem Dispersionsmittel vorteilhafterweise so vermahlen, dass eine Farbstoffteilchengrösse zwischen 0,05- 1,0 µm resultiert.

Zur Herstellung der Farbstoffdispersionen können die üblichen Dispergiermittel, vorzugsweise nichtionogenen Dispergiermittel, verwendet werden.

Als nichtionogene Dispergiermittel eignen sich insbesondere Verbindungen, welche aus der Gruppe der

(ca) Alkylenoxidaddukte der Formel

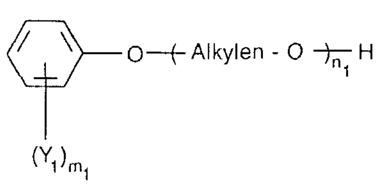

(29)

worin

$Y_1$ $C_1$-$C_{12}$-Alkyl, Aryl oder Aralkyl bedeutet,
"Alkylen" für den Ethylenrest oder Propylenrest steht und
$m_1$ 1 bis 4 und $n_1$ 4 bis 50 sind,

(cb) Alkylenoxidaddukte an
(cba) gesättigte oder ungesättigte 1-6-wertige aliphatische Alkohole,
(cbb) Fettsäuren,
(cbc) Fettamine,
(cbd) Fettamide,
(cbe) Diamine,
(cbf) Sorbitanester,
(cc) Alkylenoxid-Kondensationsprodukte (Blockpolymerisate),
(cd) Polymerisate von Vinylpyrrolidon, Vinylacetat oder Vinylalkohol und
(ce) Co- oder Ter-polymere von Vinylpyrrolidon mit Vinylacetat und/oder Vinylalkohol, ausgewählt sind.

Gut geeignete Komponenten (ca) sind Polyaddukte von 4 bis 40 Mol Ethylenoxid an 1 Mol eines Phenols, das

mindestens eine $C_4$-$C_{12}$-Alkylgruppe, eine Phenylgruppe, eine Tolylgruppe, eine α-Tolylethylgruppe, eine Benzylgruppe, eine α-Methylbenzylgruppe oder eine α,α-Dimethylbenzylgruppe aufweist, wie z.B. Butylphenol, Tributylphenol, Octylphenol, Nonylphenol, Dinonylphenol, o-Phenylphenol, Benzylphenol, Dibenzylphenol, α-Tolylethylphenol, Dibenzyl-(nonyl)-phenol, α-Methylbenzylphenol, Bis-(α-Methylbenzyl)-phenol oder Tris-(α-methylbenzyl)-phenol, wobei diese Addukte einzeln oder in Mischung verwendet werden können.

Von besonderem Interesse als Komponente (ca) sind Addukte von 6 bis 30 Mol Ethylenoxid an 1 Mol 4-Nonylphenol, an 1 Mol Dinonylphenol oder besonders an 1 Mol von Verbindungen, die durch Anlagerung von 1 bis 3 Mol von Styrolen an 1 Mol Phenole hergestellt werden.

Die Herstellung der Styrolanlagerungsprodukte erfolgt in bekannter Weise vorzugsweise in Gegenwart von Katalysatoren, wie Schwefelsäure, p-Toluolsulfonsäure oder vor allem Zinkchlorid. Als Styrole kommen zweckmässigerweise Styrol, α-Methylstyrol oder Vinyltoluol (4-Methylstyrol) in Betracht. Beispiele für die Phenole sind Phenol, Kresole oder Xylenole.

Ganz besonders bevorzugt sind Ethylenoxidaddukte der Formel

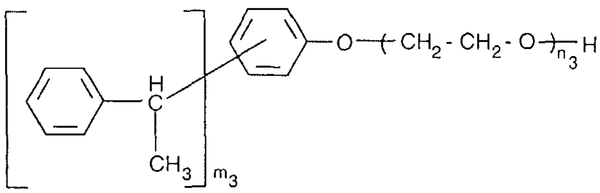

(30),

worin $m_3$ 1 bis 3 und $n_3$ 8 bis 30 bedeuten.

Ebenfalls bevorzugt sind Ethylenoxidaddukte der Formel

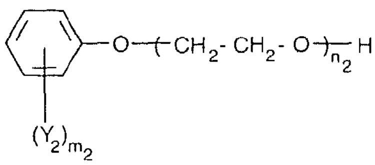

(31),

worin $Y_2$ $C_4$-$C_{12}$-Alkyl, Phenyl, Tolyl, Tolyl-$C_1$-$C_3$-alkyl oder Phenyl-$C_1$-$C_3$-alkyl, wie z.B. α-Methyl- oder α,α-Dimethylbenzyl bedeutet, und $m_2$ 1 bis 3 und $n_2$ 4 bis 40 sind. Die nichtionogene Komponente (cb) ist vorteilhafterweise

- ein Alkylenoxidanlagerungsprodukt von 1 bis 100 Mol Alkylenoxid, z.B. Ethylenoxid und/oder Propylenoxid, an 1 Mol eines aliphatischen Monoalkohols mit mindestens 4 Kohlenstoffatomen, eines 3- bis 6-wertigen aliphatischen Alkohols oder eines gegebenenfalls durch Alkyl, Phenyl, α-Tolylethyl, Benzyl, α-Methylbenzyl oder α,α-Dimethylbenzyl substituierten Phenols (cba);
- ein Alkylenoxidanlagerungsprodukt von 1 bis 100, vorzugsweise 2 bis 80 Mol Ethylenoxid wobei einzelne Ethylenoxideinheiten durch substituierte Epoxide, wie Styroloxid und/oder Propylenoxid, ersetzt sein können, an höhere ungesättigte oder gesättigte Monoalkohole (cba), Fettsäuren (cbb), Fettamine (cbc) oder Fettamide (cbd) mit 8 bis 22 Kohlenstoffatomen;
- ein Alkylenoxidanlagerungsprodukt, vorzugsweise ein Ethylenoxid-Propylenoxid-Addukt an Ethylendiamin (cbe);
- ein ethoxyliertes Sorbitanester mit langkettigen Estergruppen, wie z.B. Polyoxiethylen-Sorbitanmonolaurat mit 4 bis 20 Ethylenoxideinheiten oder Polyoxiethylen-Sorbitantrioleat mit 4 bis 20 Ethylenoxideinheiten (cbf).

Bevorzugte Komponenten (cc) sind Ethylenoxidaddukte an Polypropylenoxid (sogenannte EO-PO-Blockpolymere) und Propylenoxidaddukte an Polyethylenoxid (sogenannte umgekehrte EO-PO-Blockpolymere).

Besonders bevorzugt sind Ethylenoxid-Propylenoxid-Blockpolymere mit Molekulargewichten der Polypropylenoxidbasis von 1700 bis 4000 und einem Ethylenoxidgehalt im Gesamtmolekül von 30-80%, insbesondere 60-80%.

Werden die Farbstoffe der Formel (1) aus einer Färbeflotte auf das Fasermaterial appliziert, so geschieht dies z. B. in der Weise, dass man das Fasermaterial mit einer Färbeflotte, welche mindestens einen Farbstoff der Formel (1) und mindestens einen Pigmentfarbstoffbinder sowie gegebenenfalls weitere Hilfsmittel enthält, behandelt, das gefärbte Fasermaterial trocknet und anschliessend durch eine Hitzebehandlung fixiert.

Vorteilhafterweise wird das zu färbende Fasermaterial nach einem in der Textilindustrie üblichen kontinuierlichen Verfahren, wie z.B. nach einem Foulardverfahren behandelt.

Die Mengen, in denen man die Farbstoffe der Formel (1) in den Färbeflotten verwendet, können je nach der gewünschten Farbtiefe schwanken, im allgemeinen haben sich Mengen von 0,01 bis 15 Gewichtsprozent, insbesondere 0,1 bis 10 Gewichtsprozent der Farbstoffe der Formel (1) bezogen auf das Gewicht des Färbegutes als vorteilhaft erwiesen. Die Färbeflotten können ausser den Farbstoffen der Formel (1) und den Pigmentfarbstoffbindern weitere allgemein üblichen Zusätze enthalten, beispielsweise Vernetzerharze, wie z.B. wasserlössliche Melamin-, Formaldehyd-Melamin- und Formaldehyd-Harnstoffharze oder Vorkondensate, wie Trimethylolmelamin, Hexamethylolmelamin oder Dimethylolharnstoff oder wasserlösliche Formaldehyd-(Vor)kondensationsprodukte mit Formamid, Thioharnstoff, Guanidin, Cyanamid, Dicyandiamid und/oder wasserlöslichen organischen Sulfonaten wie z.B. Natriumsalz der Naphthalinsulfonsäure, oder Glyoxalharnstoffderivate, und vor allem N-Methylolderivate von stickstoffhaltigen Verbindungen wie z.B. gegebenenfalls veretherte Melamin/Formaldehyd-Kondensationsprodukte oder N-Methylol-Harnstoff Verbindungen, ferner Säurespender, wie z.B. aliphatische Aminchloride oder Magnesiumchlorid, wässrige Lösungen anorganischer Salze, z.B. von Alkalichloriden oder Alkalisulfaten, Alkalihydroxide, Harnstoff, Verdickungen, wie z.B. Alginatverdickungen, wasserlösliche Celluloseakyläther sowie Egalisier-, Antischaum- und/oder Entlüftungsmittel, Penetrationsbeschleuniger, Migrationsinhibitoren, Weichgriffmittel sowie Netzmittel.

Bevorzugt werden die Farbstoffe der Formel (1) in einer Druckpaste nach einem Pigmentdruckverfahren auf das Fasermaterial appliziert.

Die Mengen, in denen man die Farbstoffe der Formel (1) in den Druckpasten verwendet, können je nach der gewünschten Farbtiefe schwanken, im allgemeinen haben sich Mengen von 0,01 bis 400 g, insbesondere 0,5 bis 300 g, vor allem 1 bis 200 g der Farbstoffe pro kg Druckpaste als vorteilhaft erwiesen.
Die Druckpaste kann ausser den Farbstoffen der Formel (1) auch einen oder mehrere in den Pigmentdrucktechnik üblicherweise verwendeten Pigmentfarbstoffe enthalten.

Die Druckpaste enthält dabei üblicherweise 1 bis 300 g, insbesondere 50 bis 200 g des Pigmenffarbstoffbinders pro kg Druckpaste.

Vorteilhafterweise enthält die Druckpaste ausser den Farbstoffen der Formel (1) und den Pigmentfarbstoffbinder auch Verdickungsmittel, z.B. solche auf Basis von Poly(meth)acrylsäuren, Poly(meth)acrylamiden, sowie deren Co-, bzw. Terpolymeren.

Das Verdickungsmittel ist in der Druckpaste vorzugsweise in einer Menge von 0 bis 100 g, insbesondere 10 bis 60 g, vor allem 10 bis 40 g pro kg Druckpaste enthalten.

Die Druckpaste kann ebenfalls weitere bei dem Pigmentdruck übliche Hilfsmittel, z.B. zweckmässigerweise Vernetzer, enthalten.
Als Vernetzer eignen sich z.B. wasserlössliche Melamin-, Formaldehyd-Melamin- und Formaldehyd-Harnstoffharze oder Vorkondensate, wie Trimethylolmelamin, Hexamethylolmelamin oder Dimethylolharnstoff oder wasserlösliche Formaldehyd-(Vor)kondensationsprodukte mit Formamid, Thioharnstoff, Guanidin, Cyanamid, Dicyandiamid und/oder wasserlöslichen organischen Sulfonaten wie z.B. Natriumsalz der Naphthalinsulfonsäure, oder Glyoxalharnstoffderivate, wie z.B. die Verbindung der Formel

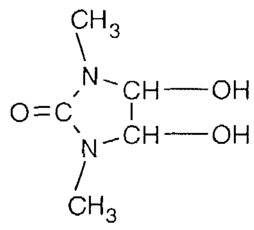

und vor allem N-Methylolderivate von stickstoffhaltigen Verbindungen wie z.B. gegebenenfalls veretherte Melamin/Formaldehyd-Kondensationsprodukte oder N-Methylol-Harnstoff Verbindungen.

Beispiele für die gegebenenfalls veretherten Melamin/Formaldehyd-Kondensationsprodukte sind die Verbindungen der Formeln

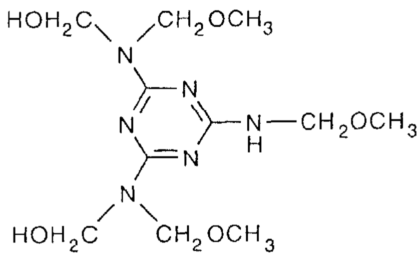

oder

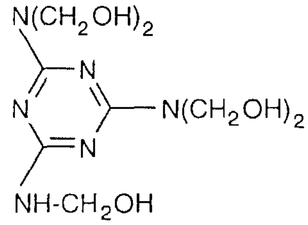

Bei den gegebenenfalls veretherten N-Methylol-Harnstoff-Verbindungen handelt es sich z.B. um gegebenenfalls nachträglich veretherte Umsetzungsprodukte von Formaldehyd mit Harnstoff oder Harnstoffderivaten, wobei als Harnstoffderivate beispielsweise cyclische Ethylen- oder Propylen-Harnstoffe, die in der Alkylengruppe auch Substituenten wie Hydroxylgruppen enthalten können, Urone oder gegebenenfalls substituierte Triazonharze in Frage kommen.

Beispiele für entsprechende N-Methylol-Harnstoff-Verbindungen sind gegebenenfalls modifizierte N-Methylol-Hydroxyethylenharnstoff-Produkte, z.B. die Verbindungen der Formel

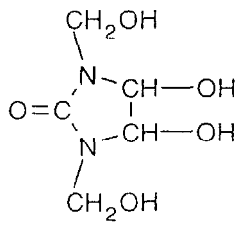

,

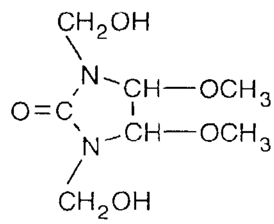

,

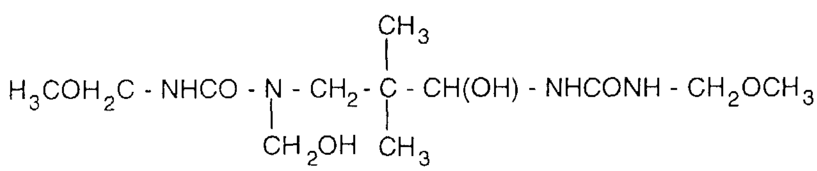

,

oder Methylolierungsprodukte auf Basis von Propylenharnstoff oder Ethylenharnstoff/Melamin.

Bevorzugte Vernetzer sind gegebenenfalls modifizierte N-Methylol-Hydroxyethylenharnstoff-Verbindungen, Methylolierungsprodukte auf Basis von Propylenharnstoff oder Ethylenharnstoff/Melamin und insbesondere gegebenenfalls veretherte Melamin/Formaldehyd-Kondensationsprodukte. Es können auch Mischungen von zwei oder mehreren verschiedenen wasserlöslichen Vernetzern verwendet werden, z.B. eine aus einem unverätherten und einem nur teilweise veretherten Melamin/Formaldehyd-Kondensationsprodukt bestehende Mischung.

Gewünschtenfalls kann die Druckpaste noch Vernetzungskatalysatoren, Säurespender wie Butyrolacton oder Natriumhydrogenphosphat, Konservierungsmittel, Sequestriermittel, Emulgatoren, wasserunlösliche Lösungsmittel, Oxidationsmittel oder Entlüftungsmittel enthalten.

Als Vernetzungskatalysatoren kommen für das erfindungsgemässe Verfahren z.B. alle üblicherweise als Katalysator für die Knitter- und Krumpffreiausrüstung verwendeten Mittel in Frage, wie sie aus dem Textilhilfsmittelkatalog 1991, Konradin Verlag R. Kohlhammer, Leinfelden-Echterdingen 1991, bekannt sind. Beispiele für geeignete Vernetzungskatalysatoren sind anorganische Säuren, z.B. Phosphorsäure; Lewis-Säuren, z.B. Zinkchlorid, Zirkonoxychlorid, $NaBF_4$, $AlCl_3$, $MgCl_2$; Ammoniumsalze, z.B. Ammoniumsulfat, Ammoniumchlorid; oder Hydrohalogenide, insbesondere Hydrochloride organischer Amine, z.B.

$$CH_3\text{-}CH_2\text{-}CH_2\text{-}NH\text{-}CH_3 \,.\, HCl.$$

Bevorzugt ist die Verwendung von Ammoniumsalzen oder magnesiumhaltigen Lewis-Säuren und insbesondere von

Ammoniumchlorid oder Magnesiumchlorid.

Als Konservierungsmittel kommen in Betracht vor allem formaldehydabgebende Mittel, wie z.B. Paraformaldehyd und Trioxan, vor allem wässrige, etwa 30 bis 40-gewichtsprozentige Formaldehydlösungen, als Sequestriermittel z.B. nitrilotriessigsaures Natrium, ethylendiamintetraessigsaures Natrium, vor allem Natrium-Polymetaphosphat, insbesondere Natrium-Hexametaphosphat, als Emulgatoren vor allem Addukte aus einem Alkylenoxid und einem Fettalkohol, insbesondere einem Addukt aus Oleylalkohol und Ethylenoxid, als wasserunlösliche Lösungsmittel hochsiedende, gesättigte Kohlenwasserstoffe, vor allem Paraffine mit einem Siedebereich von etwa 160 bis 210° C (sogenannte Lackbenzine), als Oxidationsmittel z.B. eine aromatische Nitroverbindung, vor allem eine aromatische Mono- oder Dinitrocarbonsäure oder -sulfonsäure, die gegebenenfalls als Alkylenoxidaddukt vorliegt, insbesondere eine Nitrobenzolsulfonsäure und als Entlüftungsmittel z.B. hochsiedende Lösungsmittel, vor allem Terpentinöle, höhere Alkohle, vorzugsweise $C_8$- bis $C_{10}$-Alkohole, Terpenalkohole oder Entlüftungsmittel auf Basis von Mineral- und/oder Silikonölen, insbesondere Handelsformulierungen aus etwa 15 bis 25 Gewichtsprozent eines Mineral- und Silikonölgemisches und etwa 75 bis 85 Gewichtsprozent eines $C_8$-Alkohols wie z.B. 2-Ethyl-n-hexanol.

Beim Bedrucken des Fasermateriales wird die Druckpaste ganzflächig oder stellenweise direkt auf das Fasermaterial aufgebracht, wobei Druckmaschinen üblicher Bauart, z.B. Tiefdruck-, Rotationssiebdruck-, Rouleauxdruck und Flachfilmdruckmaschinen zweckmässig eingesetzt werden. Das Bedrucken kan auch mittels Ink-jet Drucktechnik erfolgen.

Das Fasermaterial wird nach dem Bedrucken vorteilhafterweise getrocknet, vorzugsweise bei Temperaturen bis 150° C, insbesondere 80 bis 120° C, und anschliessend einem Hitzebehandlungsprocess unterworfen, um den Druck zu vervollständigen, bzw. den Farbstoff zu fixieren.

Die Hitzebehandlung kann durch ein Warmverweilverfahren, einen Thermosolierprocess oder vorzugsweise durch ein Dämpfverfahren (HT-Fixierung) durchgeführt werden.

Beim Dämpfverfahren wird das bedruckte Fasermaterial einer Behandlung in einem Dämpfer mit gegebenenfalls überhitztem Dampf, zweckmässigerweise bei einer Temperatur von 95 bis 210° C, vorteilhafterweise 100 bis 180°C unterzogen.

Vorzugsweise wird das bedruckte Fasermaterial bei der HT-Fixierung während 2 bis 5 Minuten bei 150 bis 170° C behandelt.

Die Fertigstellung der Drucke durch den sogenannten Thermosolierprocess kann nach einer oder ohne Zwischentrocknung, z.B. bei einer Temperatur von 100 bis 210° C erfolgen. Vorzugsweise erfolgt die Thermosolierung bei einer Temperatur von 120 bis 210° C, insbesondere 140 bis 180° C. Je nach der Temperatur kann die Thermosolierung 20 Sekunden bis 5 Minuten, vorzugsweise 30 Sekunden bis 4 Minuten dauern.

Üblicherweise wird die Thermosolierung während 1 bis 2 Minuten bei 190 bis 210° C durchgeführt.

Im Anschluss an den Druckprocess wird das bedruckte Fasermaterial in üblicher Weise ausgewaschen, um nichtfixierten Farbstoff zu entfernen. Man behandelt dazu das Fasermaterial beispielsweise bei 40° C bis Kochtemperatur mit Wasser, welchem gegebenenfalls eine Seife oder ein synthetisches Waschmittel zugesetzt werden kann.

Die Ausführung des erfindungsgemässen Druckverfahrens erfolgt z.B. in der Weise, dass man eine Druckpaste, welche mindestens einen Farbstoff der Formel (1) und mindestens einen Pigmentfarbstoffbinder sowie gegebenenfalls weitere Hilfsmittel enthält, auf das Fasermaterial aufbringt, das bedruckte Fasermaterial trocknet und anschliessend durch eine Hitzebehandlung fixiert.

Die erfindungsgemäss verwendete Färbeflotte oder Druckpaste kann auf verschiedenartigen Fasermaterialien, wie Wolle, Seide, Cellulose, Polyvinyl, Polyacrylnitril, Polyamid, Aramid, Polypropylen, Polyester oder Polyurethan appliziert werden.

Bevorzugt sind polyesterhaltige und cellulosehaltige Fasermaterialien.

Als polyesterhaltige Fasermaterialien kommen solche Materialien in Betracht, die ganz oder teilweise aus Polyester bestehen. Beispiele sind Celluloseesterfasern, wie z.B. Cellulose-$2^1/2$-acetatfasern und -triacetatfasern, und besonders lineare Polyesterfasern, die gegebenenfalls auch sauer modifiziert sind, welche z.B. durch Kondensation von Terephthalsäure mit Ethylenglykol oder von Isophthalsäure oder Terephthalsäure mit 1,4-Bis(hydroxymethyl)-cyclohexan erhalten werden, sowie Fasern aus Mischpolymeren von Terephthal- und Isophthalsäure mit Ethylenglykol. Geeignet sind weiter polyesterhaltige Mischfasermaterialien, d.h. Mischungen aus Polyester und anderen Fasern.

Als cellulosehaltige Fasermaterialien kommen solche Materialien in Betracht, die ganz oder teilweise aus Cellulose bestehen. Beispiele sind natürliche Fasermaterialien wie Baumwolle, Leinen oder Hanf, regenerierte Fasermaterialien wie z.B. Viskose, Polynosic oder Kupferkunstseide. Geeignet sind weiter cellulosehaltige Mischfasermaterialien, d.h. Mischungen aus Cellulose und anderen Fasern, insbesondere Baumwolle/Polyesterfasermaterialien.

Hauptsächlich werden Gewebe, Gewirke oder Bahnen dieser Fasern verwendet.

Die nach dem erfindungsgemässen Verfahren erhältlichen Färbungen oder Drucke weisen gute Allgemeinechtheiten auf; sie besitzen z.B. gute Nassechtheiten, wie Wasch-, Wasser-, Seewasser-, Überfärbe- und Schweissechtheit, eine gute Chlorechtheit, Reibechtheit, Bügelechtheit und Plissierechtheit und zeichnen sich durch eine hohe Farbstärke und einen brillanten Farbton aus. Insbesondere zeichnen sich die nach dem erfindungsgemässen Verfahren

erhältlichen Färbungen oder Drucke durch sehr gute Licht-, Sublimations- und Trockenreinigungsechtheiten aus.

Die nachfolgenden Beispiele dienen der Erläuterung der Erfindung. Darin bedeuten Teile Gewichtsteile und Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1:

2,23 g 1-Aminoanthrachinon werden in 20 ml 100%-iger Essigsäure verrührt und bei Raumtemperatur mit 1,7 ml einer 40%-igen Nitrosylschwefelsäure tropfenweise versetzt. Nach kurzem Ausreagieren trägt man 1,94 g der Pyridonverbindung der Formel

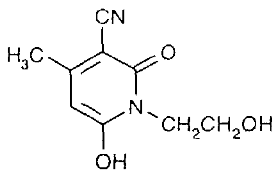

(32)

ein.

Anschliessend wird durch Zutropfen von gesättigter Natriumacetatlösung die Kupplung vervollständigt und der ausgefallene Farbstoff der Formel

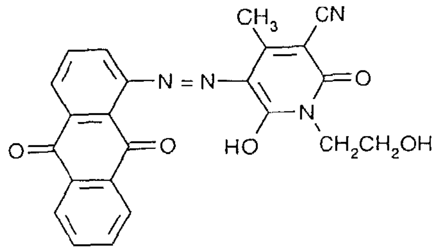

(10)

wird durch Filtration isoliert, mit heissem Wasser gewaschen und getrocknet.

Beispiel 2:

26 g Anilin-4-(bis-N,N-hydroxyethyl)-sulfonamid werden in 200 ml Wasser mit 25 ml konz. Salzsäure gelöst, auf 0° C gekühlt und mit einer wässrigen Lösung von 6,9 g Natriumnitrit diazotiert. Die erhaltene Diazoverbindung wird mit Natriumacetatlösung abgestumpft und mit einer Lösung von 18 g der Kupplungskomponente der Formel

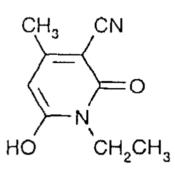

(33)

versetzt. Der pH-Wert wird auf 5 angehoben. Der entstandene Farbstoff der Formel

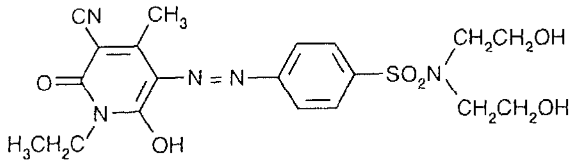

(11a)

wird filtriert, mit Wasser gewaschen und getrocknet.

Beispiel 3:

Verfährt man wie im Beispiel 1 beschrieben, verwendet aber anstatt der 1,94 g der Kupplungskomponente der Formel (32) die stöchiometrische Menge der Kupplungskomponente der Formel

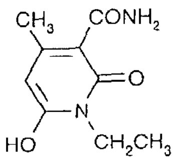

(34),

so erhält man ein Farbstoffpulver der Formel

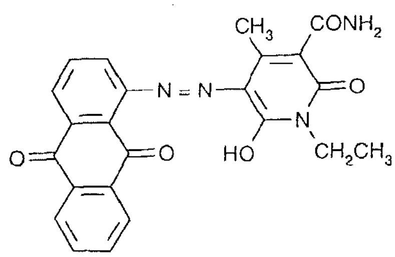

(24).

Beispiel 4:

2,23 g 1-Aminoanthrachinon werden in 20 ml 100%-iger Essigsäure verrührt und bei Raumtemperatur mit 1,7 ml einer 40%-igen Nitrosylschwefelsäure tropfenweise versetzt. Nach kurzem Ausreagieren trägt man 1.41 g der Verbindung der Formel

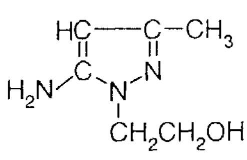

(35)

ein, und tropft zur Vervollständigung der Kupplungsreaktion eine gesättigte Natriumace-tatlösung zu. Der ausgefallenen Farbstoff wird abfiltriert, mit heissem Wasser gewaschen und getrocknet.

Man erhält ein grünstichiges gelbes Farbstoffpulver der Formel

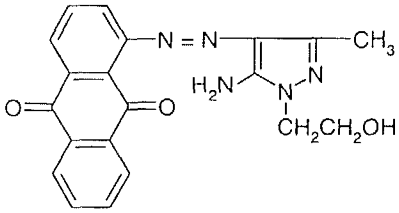

(25).

Beispiel 5:

Verfährt man wie im Beispiel 1 beschrieben, verwendet aber anstatt 2,23 g 1-Aminoanthrachinon die stöchiometrische Menge einer der in der Tabelle 1 aufgeführten Verbindungen (A) und anstatt 1,94 g der Kupplungskomponente der Formel (32) die stöchiometrische Menge einer der in der Tabelle 1 aufgeführten Kupplungskomponenten (B), so erhält man die in der Tabelle 1 angegebenen Farbstoffe der Formeln (12) bis (23).

Tabelle 1

| Verbindung (A) | Kupplungskomponente (B) | Farbstoff der Formel |
|---|---|---|
| 1-Aminoanthrachinon | 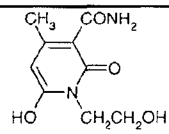 | 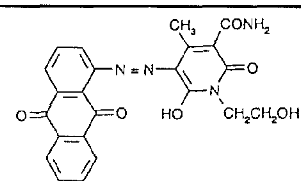 (12) |
| 1-Aminoanthrachinon | 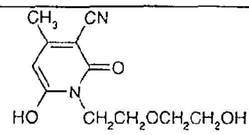 | 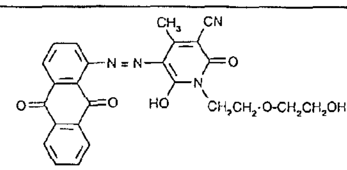 (13) |
| 2,4-Dinitroanilin | 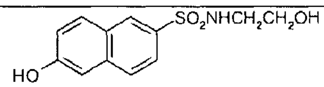 | 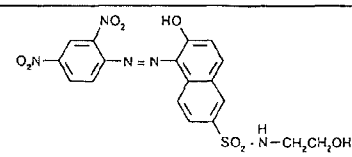 (14) |
| Anilin-4-(bis-N,N-hydroxyethyl)-sulfonamid | 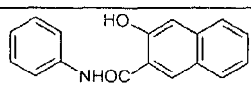 | 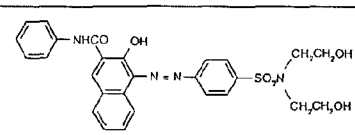 (15a) |

| Verbindung (A) | Kupplungskomponente (B) | Farbstoff der Formel |
|---|---|---|
| 2,4-Dinitroanilin | 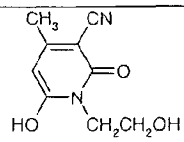 | 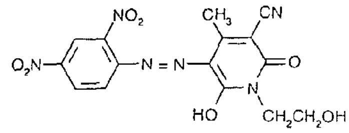 (16) |
| 2-Nitro-4,5-dichloranilin | 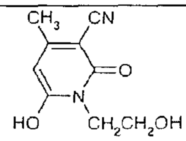 | 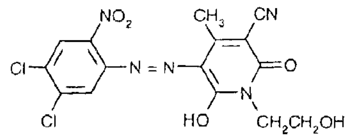 (17) |
| 2-Nitroanilin | 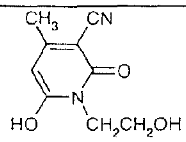 | 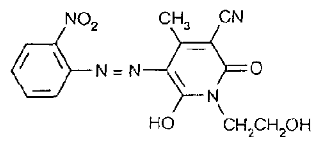 (18) |
| 2-Nitro-4-chloranilin | 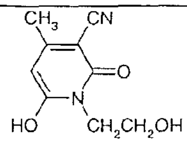 | 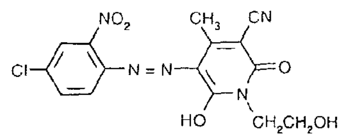 (19) |
| 2-Chlor-4-nitroanilin | 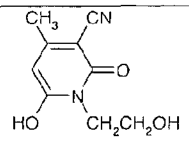 | 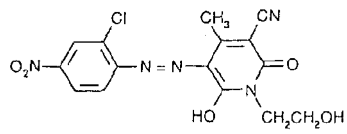 (20) |
| 2,4,5-Trichloranilin | 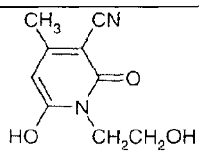 | 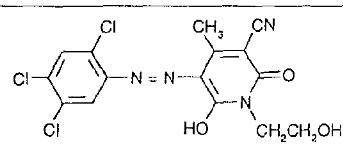 (21) |
| 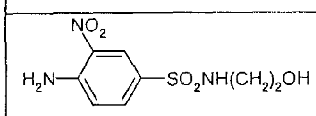 | 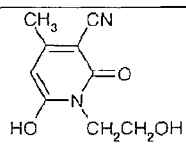 | 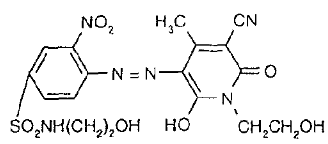 (22a) |
| 1-Aminoanthrachinon | 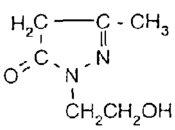 | 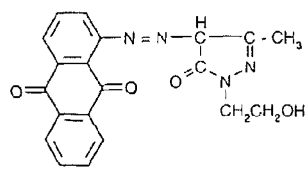 (23) |

Beispiel 6:

Ein Baumwollgewebe wird mit einer Druckpaste, enthaltend

30,6 g einer 21,5%-igen wässrigen, mikrodispergierten Formulierung des Farbstoffes der Formel (10),
120 g eines handelsüblichen Acrylatbinders (®Alcoprint PBA),
5 g einer 30%-igen wässrigen Ammoniaklösung,
3 g eines handelsüblichen Netzmittels (®Lyoprint AP), und
16 g eines Ammoniumsalzes eines synthetischen Verdickers auf Polyacrylsäurebasis pro kg Druckpaste,

bedruckt, 90 Sekunden bei 120° C getrocknet und anschliessend in einem Heisslufttrockner während 4 Minuten bei 160° C fixiert.
Man erhält einen goldgelben Druck mit guten Licht-, Sublimations- und Trockenreinigungsechtheiten.

Beispiel 7:

Verfährt man wie in Beispiel 6 angegeben, verwendet aber anstatt 30,6 g einer 21,5%-igen wässrigen, mikrodispergierten Formulierung des Farbstoffes der Formel (10) die gleiche Menge des Farbstoffes der Formel (11a), der Formel (12) oder der Formel (22a) erhält man ebenfalls Drucke mit guten Licht-, Sublimations- und Trockenreinigungsechtheiten.

Beispiel 8:

Verfährt man wie in Beispiel 6 angegeben, verwendet aber anstatt eines Baumwollgewebes ein Polyestergewebe, erhält man ebenfalls einen goldgelben Druck mit guten Licht-, Sublimations- und Trockenreinigungsechtheiten.

Beispiel 9:

Verfährt man wie in Beispiel 6 angegeben, verwendet aber anstatt eines Baumwollgewebes ein Polyester/Baumwolle-67/33-Mischgewebe, erhält man ebenfalls einen goldgelben Druck mit guten Licht-, Sublimations- und Trockenreinigungsechtheiten.

Beispiel 10:

Ein Baumwollgewebe wird mit einer wässrigen Flotte, enthaltend

43 g/l einer 21,5%-igen wässrigen, mikrodispergierten Formulierung des Farbstoffes der Formel

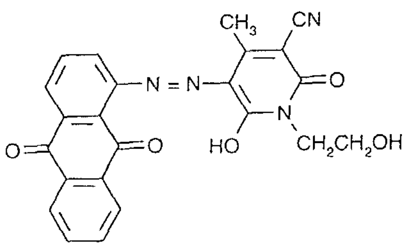

(10),

60 g/l eines handelsüblichen Weichmachers (®Avivan MS),
40 g/l eines handelsüblichen Acrylatbinders (®Dicrylan AM),
25 g/l eines handelsüblichen Migrstionsinhibitors (®Irgapadol MP),
2 g/l eines handelsüblichen Netzmittels (®Cibaflow Pad), und
20 g/l Polyethylenglykol PEG 400,

foulardiert (Flottenaufnahme ca. 70%), 90 Sekunden bei 120° C getrocknet und anschliessend in einem Heisslufttrockner während 90 Sekunden bei 160° C fixiert.
Man erhält eine goldgelbe Färbung mit guten Licht-, Sublimations- und Trockenreinigungsechtheiten.

Beispiel 11:

Ein Baumwoll/Polyester (50/50)-Mischgewebe wird mit einer wässrigen Flotte, enthaltend 43 g/l einer 21,5%-igen wässrigen, mikrodispergierten Formulierung des Farbstoffes der Formel

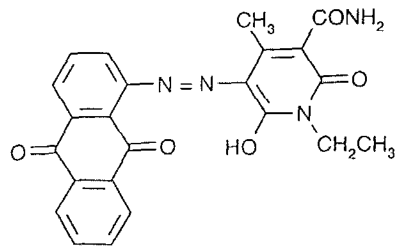

(24),

60 g/l eines handelsüblichen Weichmachers (®Avivan MS),
40 g/l eines handelsüblichen Acrylatbinders (®Dicrylan AM),
25 g/l eines handelsüblichen Migrstionsinhibitors (®Irgapadol MP),
2 g/l eines handelsüblichen Netzmittels (®Cibaflow Pad),
20 g/l Polyethylenglykol PEG 400,
5 g/l einer handelsüblichen Vernetzerharzformulierung (®Knittex FEL), und
2 g/l Magnesiumchlorid-hexahydrat,

foulardiert (Flottenaufnahme ca. 70%), 90 Sekunden bei 120° C getrocknet und anschliessend in einem Heisslufttrockner während 60 Sekunden bei 170° C fixiert.
Man erhält eine gelbe Färbung mit guten Licht-, Sublimations- und Trockenreinigungsechtheiten.

**Patentansprüche**

1. Verfahren zum Färben oder Bedrucken von Fasermaterial nach dem Pigmentfärbe- oder Pigmentdruckverfahren, welches dadurch gekennzeichnet ist, dass man eine Färbeflotte oder eine Druckpaste, enthaltend mindestens einen Farbstoff der Formel

$$D - (X)_n \qquad (1),$$

worin
D einen Rest eines unlöslichen organischen Farbstoffes der Phthalocyanin-, Perinon-, Indigoid-, Thioindigoid-, Dioxazin-, Diketopyrrolopyrrol-, Isoindolinon-, Perylen-, Chinacridon-, Metallkomplex-, Monoazo-, Disazo-, Trisazo- oder Anthrachinonreihe bedeutet, X ein hydrophiler, polarer Rest, und n 1, 2 oder 3 ist, und mindestens einen Pigmentfarbstoffbinder sowie gegebenenfalls weitere Hilfsmittel, auf das Fasermaterial aufbringt und anschliessend fixiert.

2. Verfahren gemäss Anspruch 1, dadurch gekennzeichnet, dass man das Fasermaterial nach dem Pigmentdruckverfahren mit einer Druckpaste, enthaltend mindestens einen Farbstoff der Formel (1), und mindestens einen Pigmentfarbstoffbinder sowie gegebenenfalls weitere Hilfsmittel, bedruckt und anschliessend fixiert.

3. Verfahren gemäss Anspruch 1 oder 2, dadurch gekennzeichnet, dass D ein Rest eines unlöslichen organischen Farbstoffes der Monoazo-, Disazo-, Trisazo- oder Anthrachinonreihe ist.

4. Verfahren gemäss Anspruch 1 oder 2, dadurch gekennzeichnet, dass X eine Carbonamidogruppe, eine Sulfonamidogruppe oder ein unsubstituiertes oder durch Hydroxy substituiertes $C_4$-$C_{12}$-Alkyl bedeutet, wobei die Alkylkette ein- oder mehrfach durch Sauerstoff, Carbonamido und/oder Sulfonamido unterbrochen ist.

5. Verfahren gemäss Anspruch 4, dadurch gekennzeichnet, dass der Amidorest in der Carbonamidogruppe und/oder in der Sulfonamidogruppe mit Hydroxy-$C_1$-$C_6$-alkyl mono- oder disubstituiert ist.

6. Verfahren gemäss Anspruch 1 oder 2, dadurch gekennzeichnet, dass X ein mit einem oder mehreren Hydroxygruppen substituiertes $C_1$-$C_6$-Alkyl ist.

7. Verfahren gemäss einem der Ansprüche 1 bis 6, dadurch gekennzeichnet, dass man einen Farbstoff der Formel

(1) mit einem Molekulargewicht < als 550 verwendet.

**8.** Verfahren gemäss Anspruch 1 oder 2, dadurch gekennzeichnet, dass die verwendete Druckpaste zusätzlich ein Verdickungsmittel enthält.

**9.** Verfahren gemäss Anspruch 1 oder 2, dadurch gekennzeichnet, dass die verwendete Druckpaste zusätzlich einen Vernetzer enthält.

**10.** Verfahren gemäss Anspruch 1 oder 2, dadurch gekennzeichnet, dass die verwendete Druckpaste zusätzlich einen Vernetzungskatalysator enthält.

**11.** Verfahren gemäss Anspruch 1 oder 2, dadurch gekennzeichnet, dass die verwendete Druckpaste zusätzlich einen oder mehrere Pigmentfarbstoffe enthält.

**12.** Farbstoffe der Formel

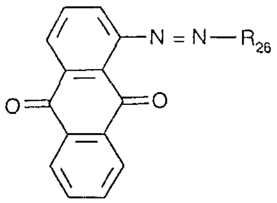

(26),

worin
$R_{26}$ ein Rest der Formel

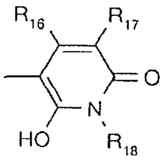

(5a),

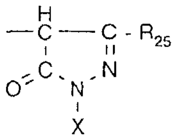

(6a),

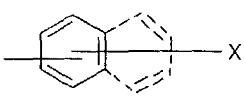

(27)

oder

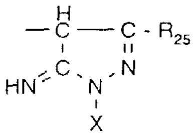

(8a)

ist,

worin $R_{16}$ $C_1$-$C_4$-Alkyl oder ein Rest X, $R_{17}$ Wasserstoff, Cyano oder Carbamoyl, $R_{18}$ Wasserstoff, $C_1$-$C_4$-Alkyl oder ein Rest X, $R_{25}$ $C_1$-$C_6$-Alkyl und X ein hydrophiler, polarer Rest, sind, und der Phenyl- bzw. Naphthylrest in der Formel (7a) gegebenenfalls durch Halogen, Cyano oder Nitro substituiert ist.

**13.** Verfahren zur Herstellung der Farbstoffe der Formel (26) gemäss Anspruch 12, dadurch gekennzeichnet, dass man eine Verbindung der Formel

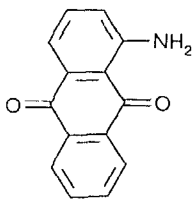

(28)

diazotiert und und an eine Kupplungskomponente der Formel (5a), (6a),(27) oder (8a) kuppelt.

**14.** Verwendung der Farbstoffe gemäss Anspruch 12 zum Färben oder Bedrucken von Fasermaterial nach dem Pigmentfärbe- oder Pigmentdruckverfahren gemäss Anspruch 1.

**15.** Das mit den Farbstoffen gemäss Anspruch 12 gefärbte oder bedruckte Fasermaterial.